(19) Europäisches Patentamt
European Patent Office
Office européen des brevets

(11) **EP 4 257 301 B1**

(12) **EUROPEAN PATENT SPECIFICATION**

(45) Date of publication and mention
of the grant of the patent:
**01.07.2026 Bulletin 2026/27**

(21) Application number: **21892363.9**

(22) Date of filing: **12.11.2021**

(51) International Patent Classification (IPC):
**G05D 1/242** *(2024.01)*   **B25J 9/16** *(2006.01)*
**B25J 19/02** *(2006.01)*   **B25J 19/06** *(2006.01)*
**B25J 11/00** *(2006.01)*   **G05D 1/622** *(2024.01)*
**G05D 109/10** *(2024.01)*   **G05D 111/10** *(2024.01)*

(52) Cooperative Patent Classification (CPC):
**B25J 9/1676; B25J 11/008; G05D 1/2424;**
**G05D 1/637;** G05B 2219/39091; G05B 2219/40476;
G05D 2109/10; G05D 2111/17

(86) International application number:
**PCT/KR2021/016526**

(87) International publication number:
**WO 2022/103196 (19.05.2022 Gazette 2022/20)**

(54) **FUNCTIONAL SAFETY SYSTEM OF ROBOT**

FUNKTIONELLES SICHERHEITSSYSTEM FÜR ROBOTER

SYSTÈME DE SÉCURITÉ FONCTIONNELLE D'UN ROBOT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.11.2020 KR 20200151001**
**10.11.2021 KR 20210153766**
**10.11.2021 KR 20210153767**
**10.11.2021 KR 20210153768**

(43) Date of publication of application:
**11.10.2023 Bulletin 2023/41**

(73) Proprietors:
• **Yujin Robot Co., Ltd.**
**Incheon, 22013 (KR)**
• **Miele & Cie. KG**
**33332 Gütersloh (DE)**

(72) Inventors:
• **PARK, Seong Ju**
**Incheon 22013 (KR)**
• **KIM, Chang Soo**
**Incheon 22013 (KR)**
• **JANG, Seung Ho**
**Incheon 22013 (KR)**
• **SEO, Dong Hyeon**
**Incheon 22013 (KR)**

(74) Representative: **Ellerbrächter, Dirk**
**Carl-Miele-Straße 29**
**33332 Gütersloh (DE)**

(56) References cited:
WO-A1-2017/050358    CN-A- 110 989 605
JP-A- 2009 518 073    KR-A- 20080 027 675
KR-A- 20180 061 929    KR-A- 20180 099 090
KR-B1- 101 986 919    US-A1- 2009 222 134
US-A1- 2017 025 019    US-A1- 2017 313 332
US-A1- 2019 161 274    US-A1- 2019 161 274
US-A1- 2019 262 993

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND

### Field

The present disclosure relates to a functional safety system of a robot, and more particularly, to an apparatus and a method for generating a dynamic safety zone of a mobile robot which generate a safety zone which is a zone to sense whether there is an obstacle.

Further, the present disclosure relates to a functional safety system of a robot, and more particularly, to a duplex system architecture modularizing apparatus and method of a mobile robot which duplex a module to satisfy a performance level d (pl-d) required by robot functional safety.

Furthermore, the present disclosure relates to a functional safety system of a robot, and more particularly, to a sensor duplexing apparatus and method of a mobile robot which duplex a module to satisfy a performance level d (pl-d) required by robot functional safety.

### Description of the Related Art

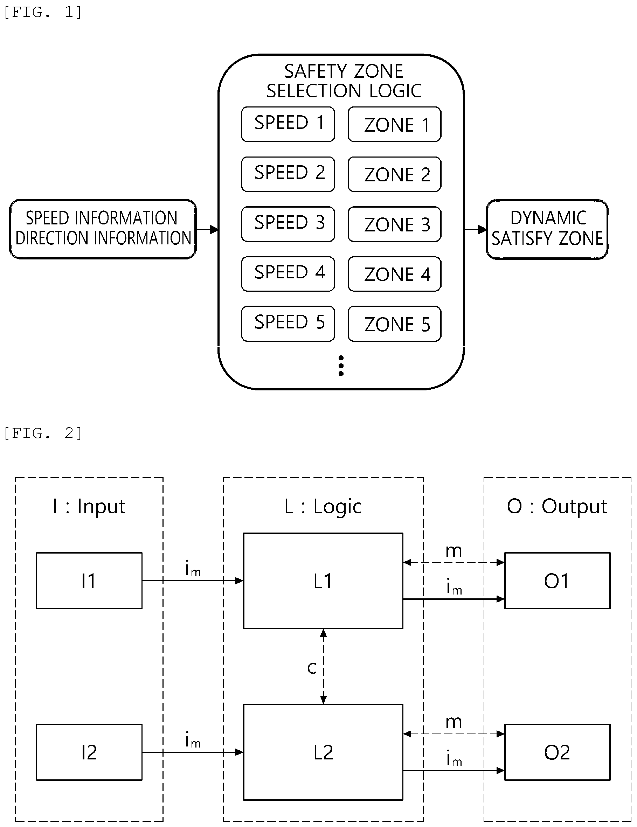

FIG. 1 is a view for explaining a method of generating a safety zone of the related art.

When a dynamic safety zone of a robot is generated in the related art, a user receives and stores a shape of a static zone at every speed designated by a user and then if a speed reaches a corresponding speed, it is changed to a zone stored by the user to inspect whether there is an obstacle in the corresponding zone and stop. By doing this, the safety is ensured according to a number and shapes of zones according to a speed designated by the user. As a traveling direction of the robot is diversified, the number of zones according to the speed needs to be increased as many as the traveling directions so that a method of directly inputting the safety zone by the user has limitations according to the number of zones. A performance level d (PL-d) LiDAR (light detection and ranging) which uses a dynamic safety zone limits a number of safety zones and a budget model may inputs up to six zones and a high-end model may input up to 32 zones. As on example, a robot using a mecanum wheel which requires various directions travels in both the x-axis and the y-axis and travels while rotating. Therefore, it is difficult for the user to designate an appropriate safety zone according to the speed and the direction for the dynamic driving. Further, as the speed is subdivided to increase the density between zones, the number of zones which need to be input by the user is also increased so that the larger the number of zones, the higher the risk due to the user fault. That is, as illustrated in FIG. 1, according to the safety zone generating method of the related art, in a state in which the user matches and stores the speed and the safety zone, when the corresponding condition is satisfied, the safety zone is changed so that the number of safety zones is limited. The higher the density between the safety zones, the larger the number of safety zones and the higher the risk of the user fault by the user.

FIG. 2 is a view for explaining a duplexing concept for a performance level d with category 3 required by a robot functional safety.

In order to ensure a safety of the robot, the duplexing of the module at a performance level (pl) related to the functional safety is being demanded. However, according to the related art, when an existing sensor is removed or a new sensor is added, there is a problem in that a system architecture needs to be changed according to the changed content to satisfy the performance level (pl) of the robot.

In order to ensure a safety of the robot, the duplexing of the module at a performance level (pl) related to the functional safety is being demanded. The duplex system can be simply implemented using a LiDAR sensor certified for the performance level d (pl-d). However, the LiDAR sensor certified for the performance level d (pl-d) is expensive so that there is a problem in that it takes a lot of money to implement the duplex system. Further, only a function provided by a manufacturer that manufactures the corresponding LiDAR sensor can be used so that it is difficult to flexibly implement a function.

In order to satisfy pl-d requested by the functional safety of the robot, as illustrated in FIG. 2, three module terminals including a input terminal I, a logic terminal L, and an output terminal O need to be duplexed. The input terminal is duplexed to a "LiDAR sensor A (I1)" and a LiDAR sensor B(I2)", the logic terminal is duplexed to a "LiDAR logic board A (L1)" and a "LiDAR logic board B(L2)", and the output terminal is duplexed to "01" and "02" and stops when the result is "0" or "2".

Document US 2019/1 61 274 A1 discloses a collision prevention for autonomous vehicles.
Document US 2009/222134 A1 discloses a camera-based monitoring of machines with mobile machine elements for collision prevention.
Document WO 2017/050358 A1 discloses a dynamic navigation method for autonomous vehicles.

# EP 4 257 301 B1

## SUMMARY

An object to be achieved by the present disclosure is to provide an apparatus and a method for generating a dynamic safety zone of a mobile robot which variably generate a safety zone required for a functional safety of a mobile robot according to an appearance and a speed of the mobile robot.

An object to be achieved by the present disclosure is to provide an apparatus and a method for modularizing a duplex system architecture of a mobile robot which duplex the entire system architecture to satisfy a performance level d (pl-d) demanded by the functional system of a robot.

An object to be achieved by the present disclosure is to provide an apparatus and a method for modularizing a duplex system architecture of a mobile robot which duplex a sensor using obstacle information detected by a sensor to satisfy a performance level d (pl-d) demanded by the functional system of a robot.

Other and further objects of the present disclosure which are not specifically described can be further considered within the scope easily deduced from the following detailed description and the effect.

In order to achieve the above-described objects, according to an aspect of the present disclosure, a dynamic safety zone generating apparatus of a mobile robot includes an information acquiring unit which acquires a movement direction and a movement speed of a mobile robot; and a safety zone generating unit which dynamically generates a safety zone for the mobile robot based on at least one of shape information of the mobile robot, a movement direction of the mobile robot acquired by the information acquiring unit, and a movement speed of the mobile robot acquired by the information acquiring unit.

Here, the safety zone generating unit acquires a future predicted position of the mobile robot based on the movement direction and the movement speed of the mobile robot and dynamically generates a safety zone of the mobile robot based on the shape information of the mobile robot and the future predicted location of the mobile robot.

Here, the dynamic safety zone generating unit acquires the movement speed of the x-axis direction and the movement speed of the y-axis direction based on the movement direction and the movement speed of the mobile robot, acquires the future predicted x-axis location based on the movement speed of the x-axis direction and acquires the future predicted y-axis location of the mobile robot based on the movement speed of the y-axis direction, and acquires a future predicted location of the mobile robot based on the future predicted x-axis location and the future predicted y-axis location.

Here, the safety zone generating unit acquires a default safety zone based on the shape information of the mobile robot and dynamically generates a safety zone for the mobile robot based on the default safety zone and the future predicted location of the mobile robot.

Here, the safety zone generating unit acquires front, rear, left, and right distances with respect to the center point of the mobile robot based on the shape information of the mobile robot and acquires a default safety zone formed of four vertices based on the center point of the robot and the front, rear, left, and right distances.

Here, the safety zone generating unit 130 varies the front, rear, left, and right distances according to the default safety zone based on the future predicted location of the mobile robot to dynamically generate the safety zone for the mobile robot. Here, the safety zone generating unit acquires a plurality of sub safety zones by varying the front, rear, left, and right distances according to the default safety zone plural times, based on the current location of the mobile robot and the future predicted location of the mobile robot and dynamically generates the safety zone for the mobile robot based on the plurality of sub safety zones.

In order to achieve the above-described objects, according to an aspect of the present disclosure, a sensor duplexing apparatus of a mobile robot an input unit in which a plurality of sensors is mounted; a logic unit in which a plurality of logic boards corresponding to the plurality of sensors mounted in the input unit is mounted; an output unit which transmits an output value to the outside based on the output of the plurality of logic boards mounted in the logic unit; and a controller which duplexes the sensor in the unit of predetermined duplexing areas based on obstacle information detected by each of the plurality of sensors.

Here, the controller duplexes two sensors based on obstacle information detected by two sensors corresponding to the duplexing area.

Here, when obstacle information detected by two sensors corresponding to the duplexing area match, the controller determines that duplexing of two sensors is successful and when obstacle information detected by two sensors corresponding to the duplexing area do not match, the controller determines that duplexing of two sensors has failed.

Here, the controller identifies whether the obstacle information detected by two sensors corresponding to the duplexing area match using predetermined sensor error information.

Here, the controller duplexes two sensors using obstacle information detected by two sensors based on the dynamic safety zone generated by two sensors corresponding to the duplexing area.

In order to achieve the above-described objects, according to an aspect of the present disclosure, a duplex system architecture modularizing apparatus of a mobile robot includes an input unit in which a plurality of sensors is mounted; a logic unit in which a plurality of logic boards corresponding to the plurality of sensors mounted in the input unit is mounted; an output unit which transmits an output value to the outside using a duplexing parameter based on the output of

3

the plurality of logic boards mounted in the logic unit; and a controller which changes a value of the duplexing parameter including logic board identification information, logic board type information, and sensor location information based on duplexing target information input by a user.

According to the apparatus and the method for generating a dynamic safety zone of a mobile robot according to the exemplary embodiment of the present disclosure, an expected location of a mobile robot can be calculated according to a speed/direction by shape information and direction/speed information of a mobile robot without inputting the safety zone by the user and a dynamic safety zone is automatically generated to be used for all mobile robots mounted with various wheels, such as a diff wheel or a Mecanum wheel. Further, the safety zones are automatically generated in all directions without directly inputting the safety zone by the user so that the safety function for the density between the safety zones and omni-directions can be performed and the user fault caused by the user input may be significantly reduced.

Further, according to the apparatus and the method for modularizing a duplex system architecture of a mobile robot according to an exemplary embodiment of the present disclosure, in order to satisfy the performance level d (pl-d) demanded by the functional safety of the robot, the entire system architecture is duplexed to remove a sensor or add a new sensor without changing the entire system architecture.

Further, according to the apparatus and the method for duplexing a sensor of a mobile robot according to the exemplary embodiment of the present disclosure, in order to satisfy the performance level d (pl-d) demanded by the functional safety of the robot, the sensor is duplexed using obstacle information detected by the sensor so that a duplex system may be implemented using a cheap general LiDAR sensor which is not certified for pl-d.

The effects of the present invention are not limited to the technical effects mentioned above, and other effects which are not mentioned can be clearly understood by those skilled in the art from the following description

**BRIEF DESCRIPTION OF DRAWINGS**

FIG. 1 is a view for explaining a method of generating a safety zone of the related art;
FIG. 2 is a view for explaining a duplexing concept for a performance level d with category 3 required by a robot functional safety;
FIG. 3 is a block diagram for explaining an apparatus of generating a dynamic safety zone of a mobile robot according to a first exemplary embodiment of the present disclosure;
FIG. 4 is a view for explaining a process of generating a dynamic safety zone according to a first exemplary embodiment of the present disclosure;
FIG. 5 is a view for explaining an operation of acquiring a default safety zone according to a first exemplary embodiment of the present disclosure;
FIG. 6 is a view for explaining an operation of acquiring a future predicted location according to a first exemplary embodiment of the present disclosure;
FIG. 7 is a view for explaining an operation of generating a dynamic safety zone according to a first exemplary embodiment of the present disclosure;
FIG. 8 is a view for explaining an example of generating a dynamic safety zone according to a first exemplary embodiment of the present disclosure to illustrate a straight movement on one axis;
FIG. 9 is a view for explaining an operation of generating a dynamic safety zone for diagonal movement according to a first exemplary embodiment of the present disclosure;
FIG. 10 is a view for explaining an example of generating a dynamic safety zone according to a first exemplary embodiment of the present disclosure to illustrate a diagonal movement on an x-axis and a y-axis;
FIG. 11 is a view for explaining an operation of generating a dynamic safety zone of rotational movement according to a first exemplary embodiment of the present disclosure;
FIG. 12 is a view for explaining an example of generating a dynamic safety zone according to a first exemplary embodiment of the present disclosure to illustrate a rotational movement;
FIG. 13 is a view for explaining an example of generating a dynamic safety zone according to a first exemplary embodiment of the present disclosure to illustrate a case in which a rotational movement and a straight movement simultaneously occur;
FIG. 14 is a flowchart for explaining a method for generating a dynamic safety zone of a mobile robot according to a first exemplary embodiment of the present disclosure;
FIG. 15 is a block diagram for explaining an apparatus for modularizing a duplex system architecture of a mobile robot according to a second exemplary embodiment of the present disclosure;
FIG. 16 is a block diagram for explaining a sub configuration of a duplex system architecture modularizing apparatus illustrated in FIG. 15;
FIG. 17 is a view for explaining an implementation example of a duplex system architecture modularizing apparatus of a mobile robot according to a second exemplary embodiment of the present disclosure;

FIG. 18 is a flowchart for explaining a method for modularizing a duplex system architecture of a mobile robot according to a second exemplary embodiment of the present disclosure;

FIG. 19 is a block diagram for explaining a sensor duplexing apparatus of a mobile robot according to a third exemplary embodiment of the present disclosure;

FIG. 20 is a diagram illustrating a process of duplexing a sensor according to a third embodiment of the present disclosure;

FIG. 21 is a block diagram for explaining an input unit and a logic unit of an example of a sensor duplexing apparatus of a mobile robot according to a third exemplary embodiment of the present disclosure;

FIG. 22 is a view for explaining a duplexing area of a sensor duplexing apparatus illustrated in FIG. 21;

FIG. 23 is a view for explaining a duplexing area according to an obstacle a sensor duplexing apparatus illustrated in FIG. 21;

FIG. 24 is a view for explaining an duplexing area of a sensor duplexing apparatus of a mobile robot according to a third exemplary embodiment of the present disclosure; and

FIG. 25 is a flowchart for explaining a sensor duplexing method of a mobile robot according to a third exemplary embodiment of the present disclosure.

## DETAILED DESCRIPTION OF THE EMBODIMENT

Hereinafter, embodiments of the present invention will be described in detail with reference to the accompanying drawings. Advantages and features of the present disclosure, and methods for accomplishing the same will be more clearly understood from exemplary embodiments described below with reference to the accompanying drawings. However, the present invention is not limited to exemplary embodiments disclosed herein but will be implemented in various different forms. The exemplary embodiments are provided by way of example only so that a person of ordinary skilled in the art can fully understand the disclosures of the present invention and the scope of the present invention. Therefore, the present invention will be defined only by the scope of the appended claims. Like reference numerals generally denote like elements throughout the specification. Unless otherwise defined, all terms (including technical and scientific terms) used in the present specification may be used as the meaning which may be commonly understood by the person with ordinary skill in the art, to which the present invention belongs. It will be further understood that terms defined in commonly used dictionaries should not be interpreted in an idealized or excessive sense unless expressly and specifically defined.

In the specification, the terms "first" or "second" are used to distinguish one component from the other component so that the scope should not be limited by these terms. For example, a first component may be referred to as a second component, and similarly, a second component may be referred to as a first component.

In the present specification, in each step, numerical symbols (for example, a, b, and c) are used for the convenience of description, but do not explain the order of the steps so that unless the context apparently indicates a specific order, the order may be different from the order described in the specification. That is, the steps may be performed in the order as described or simultaneously, or an opposite order.

In this specification, the terms "have", "may have", "include", or "may include" represent the presence of the characteristic (for example, a numerical value, a function, an operation, or a component such as a part"), but do not exclude the presence of additional characteristic.

The term "~unit" used in the specification refers to a software or hardware component such as a field programmable gate array (FPGA) or an ASIC and "~unit" performs some functions. However, "~unit" is not limited to the software or the hardware. "~unit" may be configured to be in an addressable storage medium or may be configured to reproduce one or more processors. Accordingly, as an example, "~unit" includes components such as software components, object oriented software components, class components, and task components, processes, functions, attributes, procedures, subroutines, segments of a program code, drivers, a firmware, a microcode, a circuit, data, database, and data structures. A function which is provided in the components and "~units" may be combined with a smaller number of components and "~units" or divided into additional components and "~units".

Hereinafter, a functional safety system of a robot according to the present disclosure will be described in detail with reference to the accompanying drawing.

The functional safety system of a robot according to the present disclosure dynamically generates a safety zone and duplexes a system module and a LiDAR sensor for a performance level d (pl-d).

<First exemplary embodiment: Apparatus and method for generating dynamic safety zone of mobile robot>

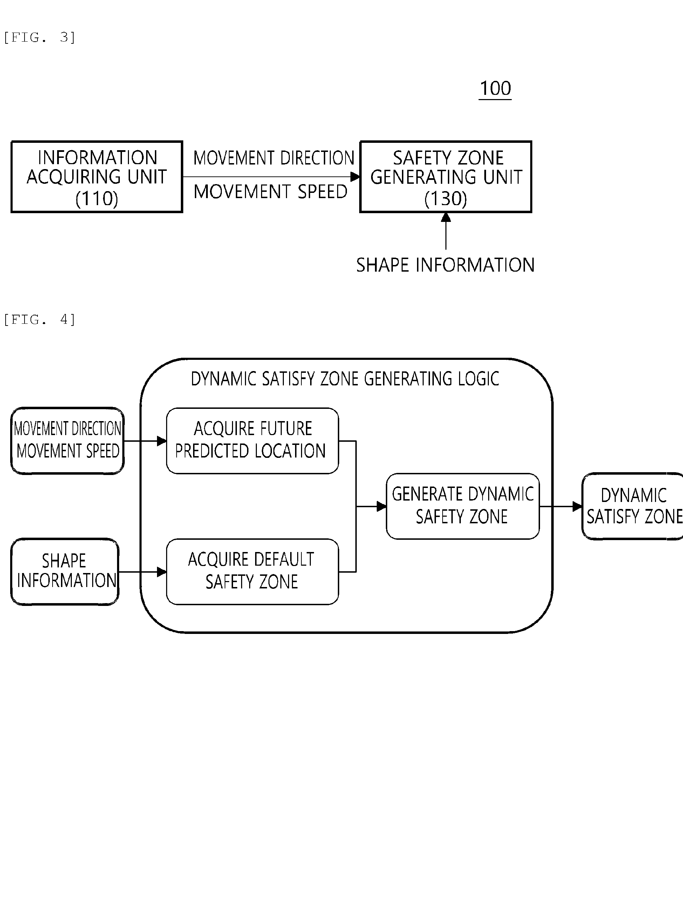

An apparatus and a method for generating a dynamic safety zone of a mobile robot which is a first exemplary embodiment of a functional safety system of a robot according to the present disclosure will be described in detail with reference to FIGS. 3 to 14.

First, an apparatus for generating a dynamic safety zone of a mobile robot according to a first exemplary embodiment of the present disclosure will be described with reference to FIGS. 3 to 7.

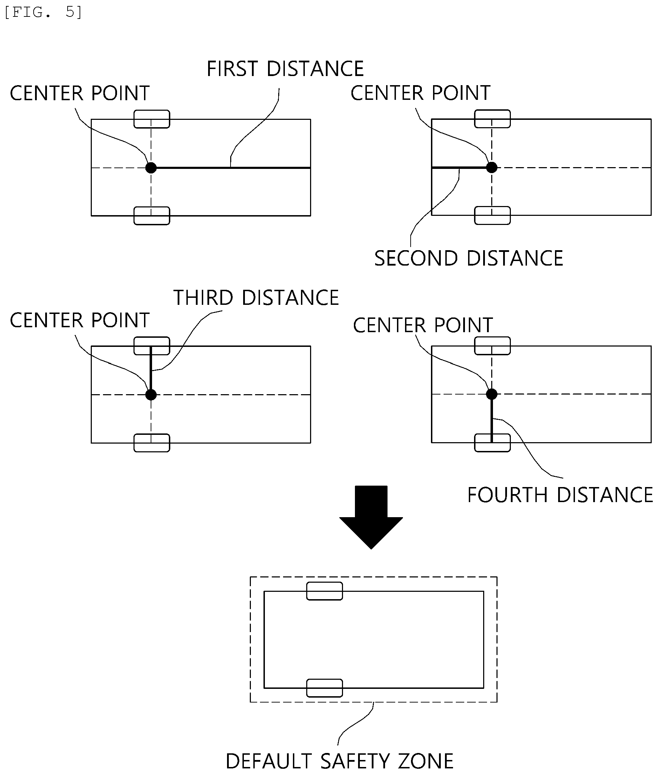

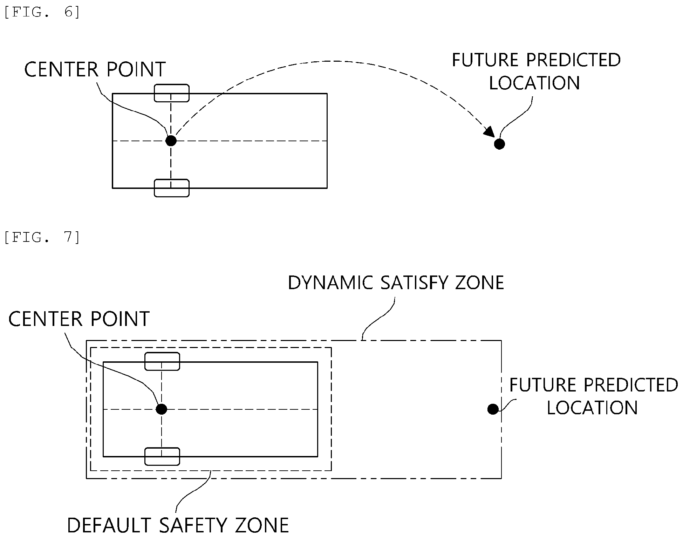

FIG. 3 is a block diagram for explaining an apparatus of generating a dynamic safety zone of a mobile robot according to a first exemplary embodiment of the present disclosure, FIG. 4 is a view for explaining a process of generating a dynamic safety zone according to a first exemplary embodiment of the present disclosure, FIG. 5 is a view for explaining an operation of acquiring a default safety zone according to a first exemplary embodiment of the present disclosure, FIG. 6 is a view for explaining an operation of acquiring a future predicted location according to a first exemplary embodiment of the present disclosure, and FIG. 7 is a view for explaining an operation of generating a dynamic safety zone according to a first exemplary embodiment of the present disclosure.

Referring to FIG. 3, an apparatus 100 for generating a dynamic safety zone of a mobile robot according to a first exemplary embodiment of the present disclosure (hereinafter, referred to as a "dynamic safety zone generating apparatus") variably generates a safety zone required for the functional safety of the mobile robot according to an appearance and a speed of the mobile robot.

Here, the present disclosure is applicable to household cleaning robots, public building cleaning robots, logistics robots, service robots, as well as industrial robots.

That is, the dynamic safety zone generating apparatus 100 according to the present disclosure is free from a method having a limitation for a number of safety zones and a high risk of a user fault due to a method of directly inputting a safety zone by a user according to a speed and a direction of the mobile robot, which is a method according to a related art, and calculates a predicted location of a mobile robot according to a speed/direction by shape information and direction/speed information of the mobile robot without inputting a safety zone by a user and automatically generates a dynamic safety zone to be used for all mobile robots mounted with various wheels such as a diff wheel and a Mecanum wheel. Accordingly, unlike a safety zone generating method of the related art in which a safety zone set by the user is not selectively changed, according to the present disclosure, the safety zone is automatically generated for all directions without directly inputting the safety zone by a user so that the safety function for the density between the safety zones and omni-directions may be performed and a user fault by the user input may be significantly reduced.

In the meantime, the dynamic safety zone generating apparatus 100 according to the present disclosure is loaded in a mobile robot to dynamically generate a safety zone based on information acquired from the sensor mounted in the mobile robot. The dynamic safety zone generating apparatus 100 according to the present disclosure is loaded in a server which remotely manages the mobile robot by wireless communication to dynamically generate the safety zone of the mobile robot based on the information provided from the mobile robot and provide information about the generated safety zone to the mobile robot. To this end, the dynamic safety zone generating apparatus 100 includes an information acquiring unit 110 and a safety zone generating unit 130.

The information generating unit 110 acquires a movement direction and a movement speed of the mobile robot.

Here, the movement direction of the mobile robot refers to one of a traveling direction according to a straight movement of the mobile robot, a traveling direction according to the rotation of the mobile robot, and a traveling direction when the rotational movement and the straight movement of the mobile robot are simultaneously generated.

The straight movement of the mobile robot refers to one of a straight movement on the x-axis, a straight movement on the y-axis, and a diagonal movement on the x-axis and the y-axis. The rotation of the mobile robot refers to one of the rotational movement to the left side and the rotational movement to the right side.

The safety zone generating unit 130 dynamically generates a safety zone for the mobile robot based on at least one of shape information of the mobile robot, a movement direction of the mobile robot acquired by the information acquiring unit 110, and a movement speed of the mobile robot acquired by the information acquiring unit 110.

At this time, the safety zone generating unit 130 dynamically generates the safety zone for the mobile robot in the unit of predetermined cycles. The safety zone generating unit 130 dynamically generates the safety zone of the mobile robot when at least one of the movement direction and the movement speed of the mobile changes.

To be more specific, the safety zone generating unit 130 acquires a future predicted position of the mobile robot based on the movement direction and the movement speed of the mobile robot. For example, as illustrated in FIG. 6, the safety zone generating unit 130 may acquire a future location of the mobile robot to be predicted with respect a current center location of the mobile robot, based on the movement direction and the movement speed of the mobile robot.

That is, the safety zone generating unit 130 may acquire the movement speed of the x-axis direction and the movement speed of the y-axis direction based on the movement direction and the movement speed of the mobile robot. The safety zone generating unit 130 may acquire a future predicted x-axis location of the mobile robot based on the movement speed of the x-axis direction and a future predicted y-axis location of the mobile robot based on the movement speed of the y-axis direction. The safety zone generating unit 130 acquires the future predicted location of the mobile robot based on the future predicted x-axis location and the future predicted y-axis location.

For example, the safety zone generating unit 130 acquires the future predicted location of the mobile robot by means of the following Equation 1.

future location.x = speed.x * (response time + braking distance + margin distance) future location.y = speed.y * (response time + braking distance + margin distance)  [Equation 1]

Here, future location.x indicates the future predicted x-axis location and future location.y indicates the future predicted y-axis location. speed.x indicates a movement speed of the x-axis direction of the mobile robot and speed. y indicates a movement speed of the y-axis direction of the mobile robot. braking distance indicates a distance required to stop the mobile robot and is set in advance according to the speed of the mobile robot. margin distance indicates a margin distance which is set in advance for the safety of the mobile robot. response time is a response time of a sensor mounted in the mobile robot and is acquired by the following Equation 2.

response time = (sensor scanning time * sampling count) + communication delay + margin response time  [Equation 2]

Here, sensor scanning time indicates a scanning time of the sensor mounted in the mobile robot. sampling count indicates a number of samplings of the sensor mounted in the mobile robot. communication delay indicates a communication delay time of the sensor mounted in the mobile robot. margin response time indicates a margin response time which is set in advance for exact measurement of the sensor mounted in the mobile robot. The safety zone generating unit 130 may dynamically generate a safety zone for the mobile robot based on the shape information of the mobile robot and the future predicted location of the mobile robot. Here, the shape information of the mobile robot refers to information about the appearance of the robot.

That is, the safety zone generating unit 130 may acquire a default safety zone based on the shape information of the mobile robot and dynamically generate a safety zone for the mobile robot based on the default safety zone and the future predicted location of the mobile robot.

At this time, the safety zone generating unit 130 acquires front, rear, left, and right distances with respect to the center point of the mobile robot based on the shape information of the mobile robot and acquires a default safety zone formed of four vertices based on the center point of the robot and the front, rear, left, and right distances. For example, as illustrated in FIG. 5, the safety zone generating unit 130 acquires a first distance (a front side distance), a second distance (a rear side distance), a third distance (a left side distance), and a fourth distance (a right side distance) with respect to the center point of the mobile robot and acquires a default safety zone based on the acquired first to fourth distances.

Further, the safety zone generating unit 130 varies the front, rear, left, and right distances according to the default safety zone based on the future predicted location of the mobile robot to dynamically generate the safety zone for the mobile robot. For example, as illustrated in FIG. 7, the safety zone generating unit 130 dynamically generates the safety zone by referring to the future predicted location of the mobile robot based on the default safety zone with respect to the current center position of the mobile robot. At this time, the distance of the safety zone is acquired by the following Equation 3.

zone distance = speed * response time + braking distance + margin distance  [Equation 3]

Here, speed indicates a movement speed of the mobile robot. response time is a response time of a sensor mounted in the mobile robot and is acquired by the above Equation 2. braking distance indicates a distance required to stop the mobile robot and is set in advance according to the speed of the mobile robot. margin distance indicates a margin distance which is set in advance for the safety of the mobile robot.

At this time, the safety zone generating unit 130 acquires a plurality of sub safety zones by varying the front, rear, left, and right distances according to the default safety zone plural times, based on the current location of the mobile robot and the future predicted location of the mobile robot and dynamically generates the safety zone for the mobile robot based on the plurality of sub safety zones. For example, the safety zone generating unit 130 acquires a sub safety zone in every predetermined distance unit, by dividing a path along which the mobile robot moves from a start point to a target time into a predetermined distance unit with the current location of the mobile robot as the start point and the future predicted location of the mobile robot as the target point and dynamically generates the safety zone for the mobile robot by overlapping the plurality of acquired sub safety zones.

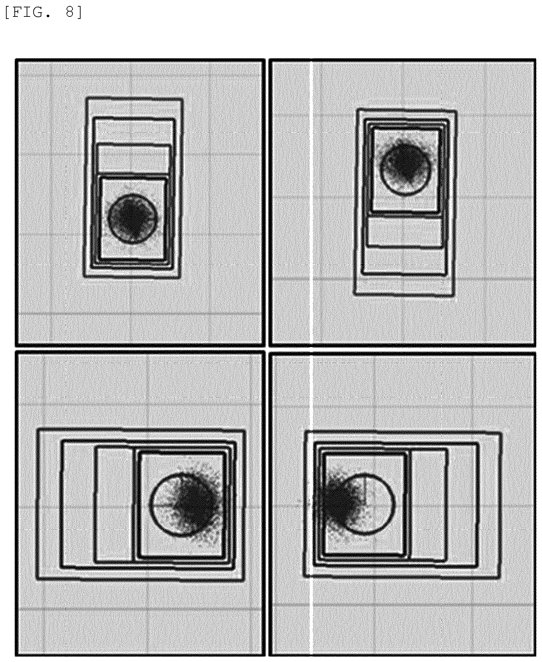

Now, an example of generating a dynamic safety zone according to the first exemplary embodiment of the present disclosure will be described with reference to FIGS. 8 to 13.

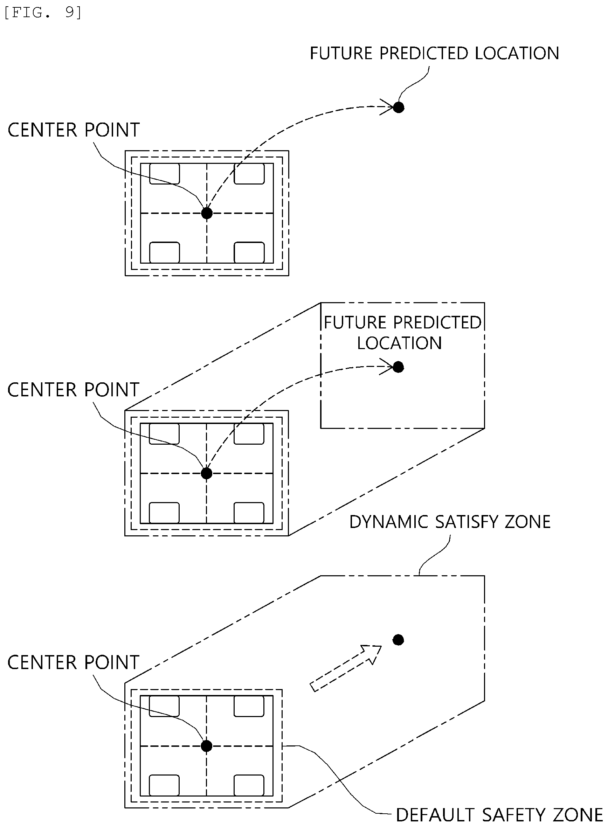

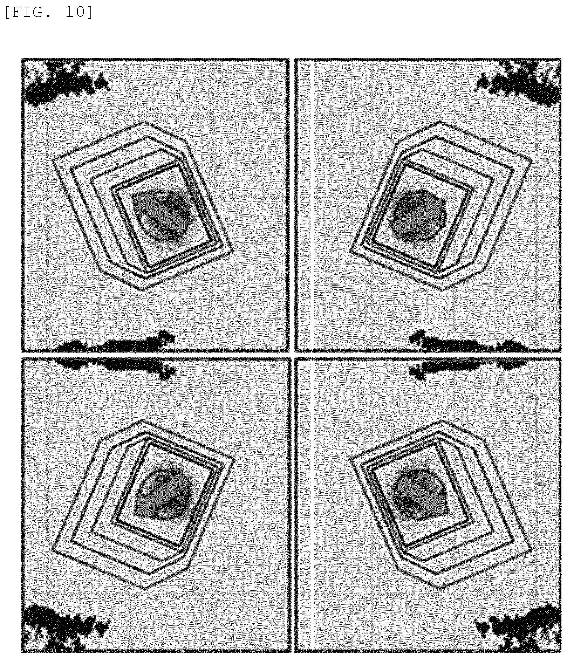

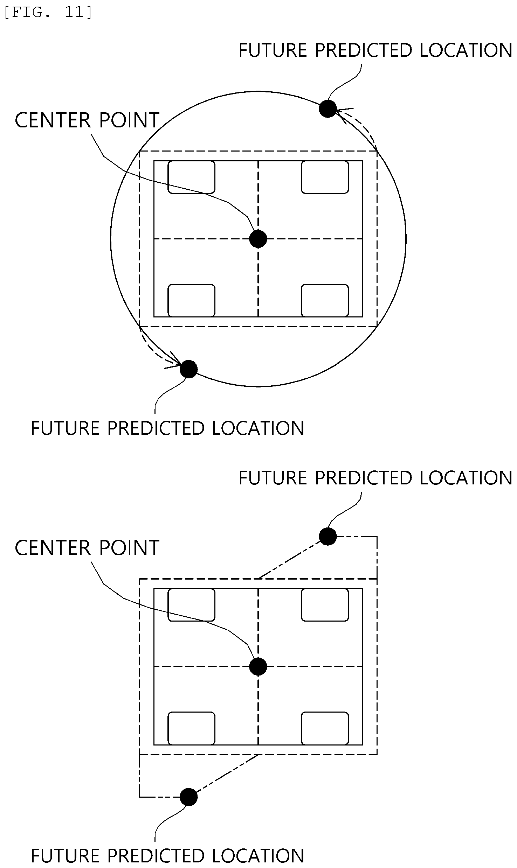

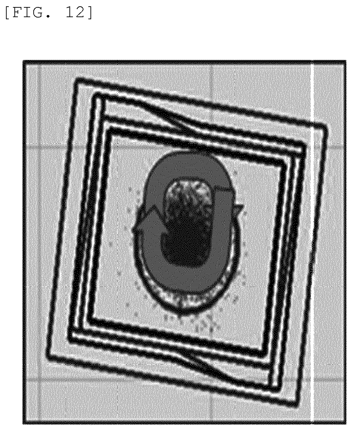

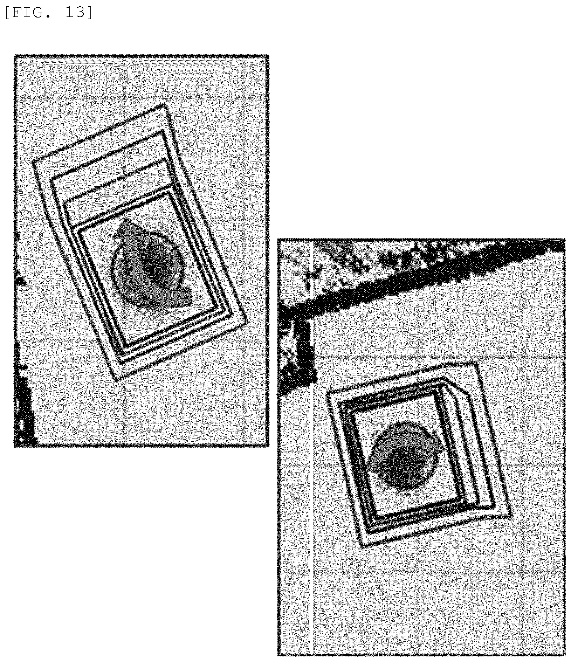

FIG. 8 is a view for explaining an example of generating a dynamic safety zone according to a first exemplary embodiment of the present disclosure to illustrate a straight movement on one axis, FIG. 9 is a view for explaining an operation of generating a dynamic safety zone for diagonal movement according to a first exemplary embodiment of the present disclosure, FIG. 10 is a view for explaining an example of generating a dynamic safety zone according to a first exemplary embodiment of the present disclosure to illustrate a diagonal movement on an x-axis and a y-axis, FIG. 11 is a view for explaining an operation of generating a dynamic safety zone of rotational movement according to a first exemplary embodiment of the present disclosure, FIG. 12 is a view for explaining an example of generating a dynamic safety zone according to a first exemplary embodiment of the present disclosure to illustrate a rotational movement, and FIG. 13 is a view for explaining an example of generating a dynamic safety zone according to a first exemplary embodiment of the present disclosure to illustrate a case in which a rotational movement and a straight movement simultaneously occur.

Referring to FIG. 8, the faster the speed, the longer the length of the safety zone which is dynamically generated and the slower the speed, the smaller the safety zone. However, the safety zone which is dynamically generated should not be smaller than the shape of the mobile robot, that is, the default safety zone.

Referring to FIGS. 9 and 10, when the mobile robot simultaneously moves to the x-axis and the y-axis, the mobile robot diagonally travels and the safety zone is dynamically and automatically generated so that the mobile robot does not collide with the obstacle during the diagonal traveling.

Referring to FIGS. 11 and 12, a shape of the safety zone which is dynamically generated according to the rotation direction of the mobile robot is changed so that when the mobile robot rotates to the right side, a upper right end and an upper left end which are likely to collide become longer and when the mobile robot rotates to the left side, the upper left end and the lower right end may become longer.

Referring to FIG. 13, when the rotational movement and the straight movement of the mobile robot are simultaneously generated so that there are a straight movement speed and a rotation speed simultaneously, a safety zone in which a rotational value is added based on a value obtained from the future predicted location of the mobile robot is generated and all the safety zones are automatically determined and changed according to the speed and the direction.

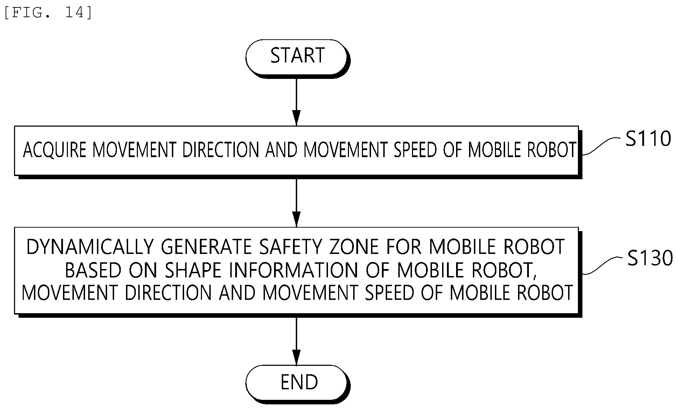

Now, a method for generating a dynamic safety zone of a mobile robot according to a first exemplary embodiment of the present disclosure will be described with reference to FIG. 14.

FIG. 14 is a flowchart for explaining a method for generating a dynamic safety zone of a mobile robot according to a first exemplary embodiment of the present disclosure.

Referring to FIG. 14, the dynamic safety zone generating apparatus 100 acquires a movement direction and a movement speed of the mobile robot (S110).

By doing this, the dynamic safety zone generating apparatus 100 dynamically generates the safety zone for the mobile robot based on at least one of the shape information of the mobile robot, the movement direction of the mobile robot, and the movement speed of the mobile robot (S130).

At this time, the dynamic safety zone generating apparatus 100 dynamically generates the safety zone for the mobile robot in the unit of predetermined cycles. The dynamic safety zone generating apparatus 100 dynamically generates the safety zone of the mobile robot when at least one of the movement direction and the movement speed of the mobile changes.

To be more specific, the dynamic safety zone generating apparatus 100 acquires a future predicted location of the mobile robot based on the movement direction and the movement speed of the mobile robot. That is, the dynamic safety zone generating apparatus 100 acquires the movement speed of the x-axis direction and the movement speed of the y-axis direction based on the movement direction and the movement speed of the mobile robot, acquires the future predicted x-axis location of the mobile robot based on the movement speed of the x-axis direction and acquires the future predicted y-axis location of the mobile robot based on the movement speed of the y-axis direction, and acquires a future predicted location of the mobile robot based on the future predicted x-axis location and the future predicted y-axis location.

The dynamic safety zone generating apparatus 100 may dynamically generate a safety zone for the mobile robot based on the shape information of the mobile robot and the future predicted location of the mobile robot.

That is, the dynamic safety zone generating apparatus 100 may acquire a default safety zone based on the shape information of the mobile robot and dynamically generate a safety zone for the mobile robot based on the default safety zone and the future predicted location of the mobile robot. At this time, the dynamic safety zone generating apparatus 100 acquires front, rear, left, and right distances with respect to the center point of the mobile robot based on the shape information of the mobile robot and acquires a default safety zone formed of four vertices based on the center point of the robot and the front, rear, left, and right distances.

Further, the dynamic safety zone generating apparatus 100 varies the front, rear, left, and right distances according to the default safety zone based on the future predicted location of the mobile robot to dynamically generate the safety zone for the mobile robot. At this time, the dynamic safety zone generating apparatus 100 acquires a plurality of sub safety zones by varying the front, rear, left, and right distances according to the default safety zone plural times, based on the current location of the mobile robot and the future predicted location of the mobile robot and dynamically generates the safety zone for the mobile robot based on the plurality of sub safety zones.

<Second exemplary embodiment: Apparatus and method for modularizing duplex system architecture of mobile robot>

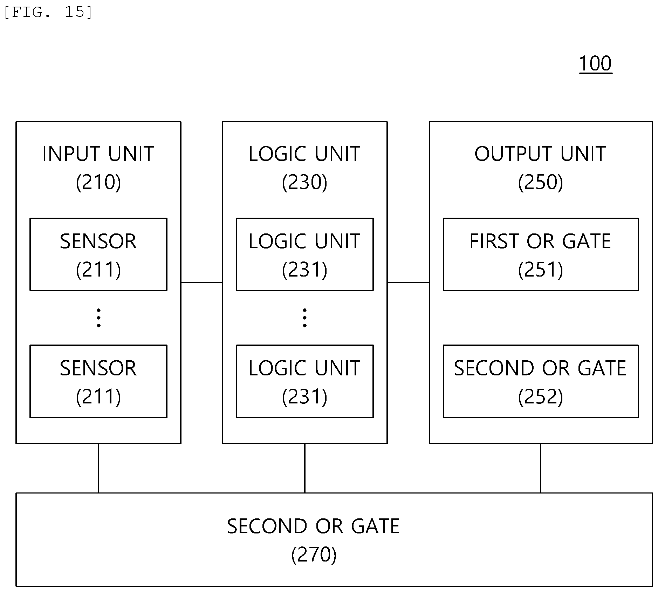

An apparatus and a method for modularizing a duplex system architecture of a mobile robot which is a second exemplary embodiment of a functional safety system of a robot according to the present disclosure will be described in detail with reference to FIGS. 15 to 18.

First, an apparatus for modularizing a duplex system architecture of a mobile robot according to a second embodiment of the present disclosure will be described with reference to FIG. 15.

FIG. 15 is a block diagram for explaining an apparatus for modularizing a duplex system architecture of a mobile robot according to a second exemplary embodiment of the present disclosure.

Referring to FIG. 15, the apparatus 200 for modularizing a duplex system architecture of a mobile robot according to a second exemplary embodiment of the present disclosure (hereinafter, referred to as a "modularizing apparatus") may duplex the entire system architecture to satisfy the pl-d (performance level d) requested by the robot functional safety. Here, the present disclosure is applicable to household cleaning robots, public building cleaning robots, logistics robots, service robots, as well as industrial robots.

In order to satisfy pl-d requested by the functional safety of the robot, as illustrated in FIG. 2, three module terminals including a input terminal I, a logic terminal L, and an output terminal O need to be duplexed. The input terminal is duplexed to a "LiDAR sensor A (I1)" and a LiDAR sensor B(I2)", the logic terminal is duplexed to a "LiDAR logic board A (L1)" and a "LiDAR logic board B (L2)", and the output terminal is duplexed to "01" and "02" and stops when the result is "0" or "2". The present disclosure relates to a method for performing the duplexing in view of the entire system architecture.

To this end, the modularizing apparatus 200 includes an input unit 210, a logic unit 230, an output unit 250, and a controller 270.

A plurality of sensors 211 may be mounted in the input unit 210.

Here, the sensor 211 may be one of a LiDAR sensor, an encoder sensor, and a cliff sensor.

In the logic unit 230, a plurality of logic boards 231 corresponding to the plurality of sensors 211 mounted in the input unit 210 may be mounted.

Here, the logic board 231 may be one of a LiDAR board, an encoder board, and the other (ETC) board.

The output unit 250 transmits an output value to the outside using a duplexing parameter based on outputs of the plurality of logic boards 231 mounted in the logic unit 230.

The controller 270 may change a value of the duplexing parameter based on duplexing target information input by the user.

Here, the duplexing parameter includes logic board identification information which is unique information to identify the logic board 231, logic board type information which is information to identify a type of the logic board 231, and sensor location information which is information to identify the location of the sensor 211.

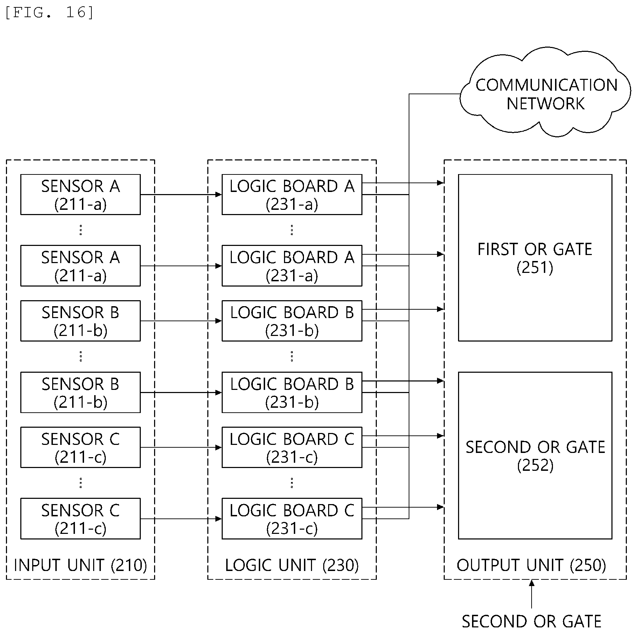

Now, the duplex system architecture modularizing apparatus of a mobile robot according to a second embodiment of the present disclosure will be described in more detail with reference to FIG. 16.

FIG. 16 is a block diagram for explaining a sub configuration of a duplex system architecture modularizing apparatus illustrated in FIG. 15.

Referring to FIG. 16, in the input unit 210 of the modularizing apparatus 200 according to the present disclosure, a plurality of "type A" sensors A 211-a is mounted, a plurality of "type B" sensors B 211-b is mounted, and a plurality of "type C" sensors C 211-c is mounted. Here, the "type A" refers to the LiDAR sensor, the "type B" refers to an Encoder sensor, and the "type C" refers to the Cliff sensor.

The logic unit 230 of the modularizing apparatus 200 includes a plurality of "type A" logic boards A 231-a mounted corresponding to the plurality of sensors A211-a mounted in the input unit 210, a plurality of "type B" logic boards B 231-b mounted corresponding to the plurality of sensors B 211-b mounted in the input unit 210, and a plurality of "type C" logic boards C 231-c mounted corresponding to the plurality of sensors C 211-c mounted in the input unit 210. Here, the "type A" refers to the LiDAR board, the "type B" refers to an Encoder board, and the "type C" refers to the Cliff board.

Further, the plurality of logic boards 231 mounted in the logic unit 230, that is, the plurality of logic boards A 231-a, the plurality of logic boards B 231-b, and the plurality of logic boards C 231-c are connected to one communication network. When duplexing target information is input by the user, the controller 270 of the modularizing apparatus 200 changes the value of the duplexing parameter in the unit of the duplexing target set based on the duplexing target information. Here, the duplexing target information includes logic board identification information of a duplexing target and sensor information corresponding to the logic board of the duplexing target.

To be more specific, the controller 270 may change the value of the duplexing parameter including a first pair of logic board identification information, a first pair of logic board type information, a first pair of sensor location information, a second pair of logic board identification information, a second pair of logic board type information, and a second pair of sensor location information in the unit of duplexing target sets to dynamically changes the duplexing target.

At this time, the output unit 250 includes two OR gates 251 and 252 and sets inputs for two OR gates 251 and 252 using the duplexing parameter based on the output of the plurality of logic boards 231 and transmits the output values of two OR gates 251 and 252.

That is, the controller 270 controls the output unit 250 based on the duplexing target information to set the output of the logic board corresponding to the first pair of duplexing target sets to be input to the first OR gate and to set the output of the logic board corresponding to the second pair of duplexing target sets to be input to the second OR gate.

For example, the sensors A 211-a which are two LiDAR sensors, the sensors B 211-b which are two Encoder sensors, and the sensors C 211-c which are two Cliff sensors are installed in the input unit 210 and the logic board A 231-a which are two LiDAR boards corresponding to two sensors A 211-a, the logic board B 231-b which are two Encoder boards corresponding to two sensors B 231-b, and the logic boards C 231-c which are two ETC boards corresponding to two sensors C 211-c are installed, and then the duplexing target information as follows may be input.

-Duplexing target information

-> Duplexing target set 1: Identification information of two logic boards A 231-a, number of sensors 211 connected to two logic boards A 231-a, and identification information of sensor 211

-> Duplexing target set 2: Identification information of two logic boards B 231-b, number of sensors 211 connected to two logic boards B 231-b, and identification information of sensor 211

-> Duplexing target set 3: Identification information of two logic boards C 231-c, number of sensors 211 connected to two logic boards C 231-c, and identification information of sensor 210

By doing this, the controller 270 of the modularizing apparatus 200 according to the present disclosure changes the value of the duplexing parameter in the unit of duplexing target set as follows, based on the above duplexing target information to dynamically change the duplexing target.

-Change value of duplexing parameter

-> Duplexing target set 1: A value of related duplexing parameter is changed with one logic board A 231-a between two logic boards A 231-a as a first pair and the other logic board A 231-a as a second pair to set two logic boards A 231-a as a duplexing target

-> Duplexing target set 2: A value of related duplexing parameter is changed with one logic board B 231-b between two logic boards B 231-b as a first pair and the other logic board B 231-b as a second pair to set two logic boards B 231-b as a duplexing target

-> Duplexing target set 3: A value of related duplexing parameter is changed with one logic board C 231-c between two logic boards C 231-c as a first pair and the other logic board C 231-c as a second pair to set two logic boards C 231-c as a duplexing target

The controller 270 may set to input one logic board A 231-a between two logic boards A 231-a set as the first pair, one logic board B 231-b between two logic boards A 231-b set as the first pair, and one logic board C 231-c between two logic boards C 231-c set as the first pair to the first OR gate 251. Further, the controller 270 may set to input one logic board A 231-a between two logic boards A 231-a set as the second pair, one logic board B 231-b between two logic boards A 231-b set as the second pair, and one logic board C 231-c between two logic boards C 231-c set as the second pair to the second OR gate 252. By doing this, according to the present disclosure, the output terminal may be duplexed.

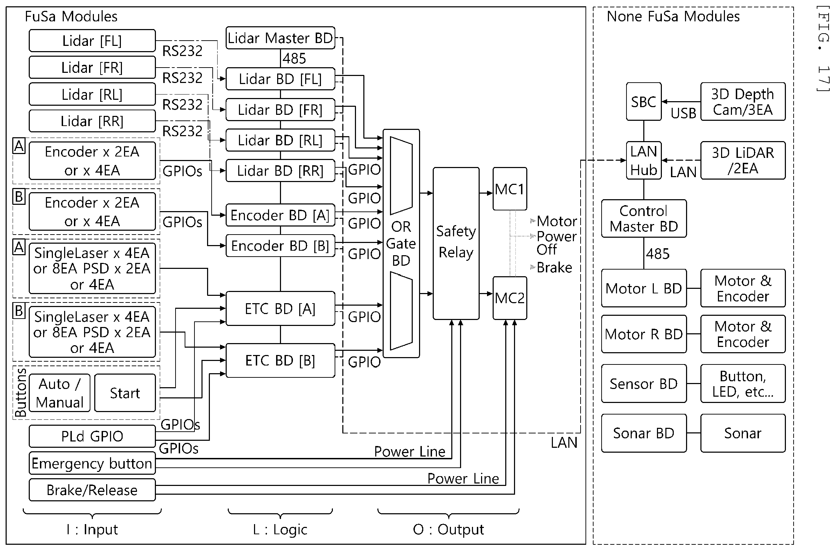

Now, an implementation example of a duplex system architecture modularizing apparatus of a mobile robot according to a second embodiment of the present disclosure will be described with reference to FIG. 17.

FIG. 17 is a view for explaining an implementation example of a duplex system architecture modularizing apparatus of a mobile robot according to a second exemplary embodiment of the present disclosure.

Referring to FIG. 17, according to the present disclosure, the entire system is configured by dividing an input terminal I, a logic terminal L, and an output terminal O and each logic board LB 231 is formed by one communication network to remove or add a module to the logic board LB 231 in accordance with the number of sensors 211 required for duplexing.

Further, in the output terminal, in order to flexibly receive data regardless of the number of two duplexed data, two OR gates 251 and 252 are configured so that even though the module of the logic board LB 231 is removed or newly added, the duplex system may be implemented without changing the entire system architecture.

That is, according to the present disclosure, the logic board LB 231 is configured for every sensor 211 to configure a duplex system in the unit of modules and the output terminal is duplexed using the output board (two OR gates) which are duplexed regardless of the number of output data from the entire logic terminals so that the pl-d architecture is possible without causing a big change of the entire duplex system architecture whenever the number of sensors 211 changes.

In the system architecture according to the present disclosure, the logic terminal is largely divided into three types: a LiDAR board, an encoder board, and an ETC board. At this time, the number of LiDAR sensors dynamically changes to two to four, the number of Encoder sensors dynamically changes to two to four, and the number of Cliff sensors dynamically changes to four to eight. The number of sensors 211 may change without separately changing the software in the board and the user may transmit the changed content to the corresponding board as data of the parameter. That is, the user may transmit the changed content to the corresponding board by inputting the duplexing target information.

When the user inputs the duplexing target information such as an ID number of the logic board 231 to be duplexed and the number of sensors 211, the corresponding board automatically changes a value of the following duplexing parameter based on the duplexing target information through an internal algorithm.

- First pair of duplexing parameters to be duplexed

  ID of logic board 231: LB_PAIR_RS485_ID_1
  Type of logic board 231: LB_PAIR_EXTRINSIC_TYPE_1
  Location of sensor 211: LB_PAIR_LIDAR_LOCATION_XYZ_1 / LB_PAIR_LIDAR_LOCATION _R_XYZ_1

- Second pair of duplexing parameters to be duplexed

  ID of logic board 231: LB_PAIR_RS485_ID_2
  Type of logic board 231: LB_PAIR_EXTRINSIC_TYPE_2
  Location of sensor 211: LB_PAIR_LIDAR_LOCATION_XYZ_2 / LB_PAIR_LIDAR_LOCATION_R_XYZ_2

In the internal board, the target to be duplexed may be dynamically changed by the duplexing parameter as described above. That is, according to the present disclosure, after changing the number of sensors to be changed in the unit of systems, when only the value of the duplexing parameter is changed in accordance therewith, the duplexing target is automatically changed.

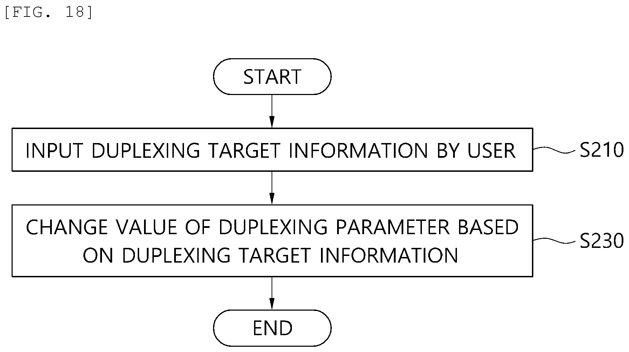

Now, an method for modularizing a duplex system architecture of a mobile robot according to a second embodiment of the present disclosure will be described with reference to FIG. 18.

FIG. 18 is a flowchart for explaining a method for modularizing a duplex system architecture of a mobile robot according to a second exemplary embodiment of the present disclosure.

Referring to FIG. 18, the modularizing apparatus 200 according to the present disclosure inputs duplexing target information by a user (S210).

Here, the duplexing target information includes logic board identification information of a duplexing target and sensor information corresponding to the logic board of the duplexing target.

Next, the modularizing apparatus 200 changes the value of the duplexing parameter based on the duplexing target information (S230).

Here, the duplexing parameter includes logic board identification information which is unique information to identify the logic board 231, logic board type information which is information to identify a type of the logic board 231, and sensor location information which is information to identify the location of the sensor 211.

That is, when duplexing target information is input by the user, the modularizing apparatus 200 changes the value of the duplexing parameter in the unit of the duplexing target set based on the duplexing target information.

To be more specific, the modularizing apparatus 200 may change the value of the duplexing parameter including a first pair of logic board identification information, a first pair of logic board type information, a first pair of sensor location information, a second pair of logic board identification information, a second pair of logic board type information, and a second pair of sensor location information in the unit of duplexing target sets to dynamically changes the duplexing target.

At this time, the output unit 250 of the modularizing apparatus 200 includes two OR gates 251 and 252 and sets inputs for two OR gates 251 and 252 using the duplexing parameter based on the output of the plurality of logic boards 231 and transmits the output values of two OR gates 251 and 252 to the outside. That is, the modularizing apparatus 200 controls the output unit 250 based on the duplexing target information to set the output of the logic board corresponding to the first pair of duplexing target sets to be input to the first OR gate and the output of the logic board corresponding to the second pair of duplexing target sets to be input to the second OR gate.

<Third exemplary embodiment: Apparatus and method for duplexing sensor of mobile robot>

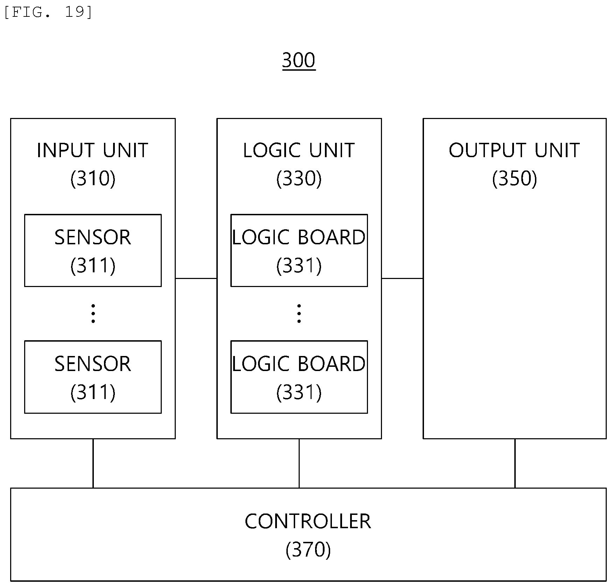

An apparatus and a method for duplexing a sensor of a mobile robot which is a third exemplary embodiment of a functional safety system of a robot according to the present disclosure will be described in detail with reference to FIGS. 19 to 25.

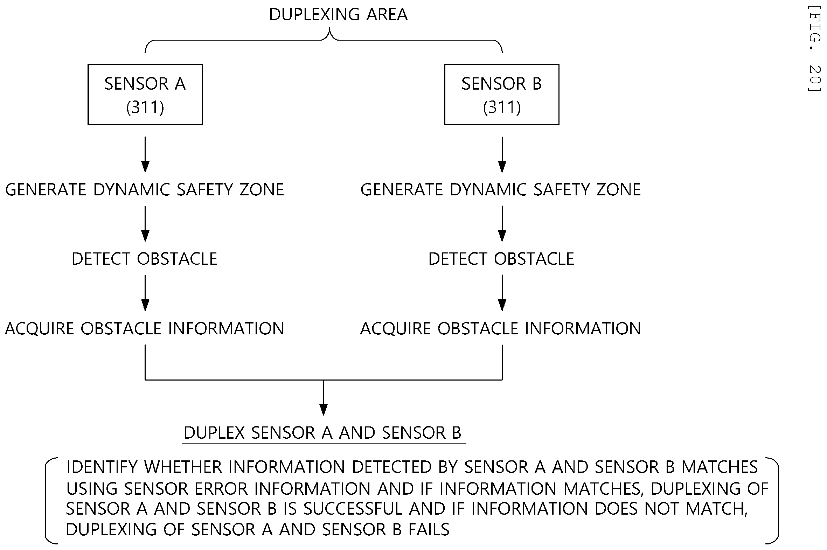

First, an apparatus for duplexing a sensor of a mobile robot according to a third exemplary embodiment of the present disclosure will be described with reference to FIGS. 19 and 20.

FIG. 19 is a block diagram for explaining a sensor duplexing apparatus of a mobile robot according to a third exemplary embodiment of the present disclosure and FIG. 20 is a diagram illustrating a process of duplexing a sensor according to a third embodiment of the present disclosure.

Referring to FIG. 19, the apparatus 300 for duplexing a sensor of a mobile robot according to a second exemplary embodiment of the present disclosure (hereinafter, referred to as a "sensor duplexing apparatus") may duplex a sensor using obstacle information detected by the sensor to satisfy the pl-d (performance level d) requested by the robot functional safety. Here, the present disclosure is applicable to household cleaning robots, public building cleaning robots, logistics robots, service robots, as well as industrial robots.

In order to satisfy pl-d requested by the functional safety of the robot, as illustrated in FIG. 2, three module terminals including a input terminal I, a logic terminal L, and an output terminal O need to be duplexed. The input terminal is duplexed to a "LiDAR sensor A (I1)" and a LiDAR sensor B(I2)", the logic terminal is duplexed to a "LiDAR logic board A (L1)" and a "LiDAR logic board B (L2)", and the output terminal is duplexed to "01" and "02" and stops when the result is "0" or "2". The present disclosure relates to a method for duplexing two LiDAR sensors using an obstacle present in a safety zone, by two LiDAR sensors which configures the logic terminal, rather than the view point of the system architecture.

To this end, the sensor duplexing apparatus 300 includes an input unit 310, a logic unit 330, an output unit 350, and a controller 370.

A plurality of sensors 311 may be mounted in the input unit 310.

Here, the sensor may be a LiDAR sensor.

In the logic unit 330, a plurality of logic boards corresponding to the plurality of sensors 311 mounted in the input unit 310 may be mounted.

Here, the logic board may be a LiDAR board.

The output unit 350 transmits an output value to the outside based on outputs of the plurality of logic boards 331 mounted in the logic unit 330.

The controller 370 may duplex a sensor in the unit of predetermined duplexing areas, based on the obstacle information detected by the plurality of sensors 311.

Here, the duplexing area refers to a spatial area which is duplexed using obstacle information detected by two sensors 311 to satisfy pl-d (performance level d) requested by the functional safety.

That is, the controller 370 may duplex two sensors 311 based on obstacle information detected by two sensors 311 corresponding to the duplexing area.

To be more specific, the controller 370 may duplex two sensors 311 using obstacle information detected by two sensors 311 based on a dynamic safety zone generated by two sensors 311 corresponding to the duplexing area. At this time, the dynamic safety zone may be dynamically generated based on the movement direction and the movement speed of the robot in which the sensor duplexing apparatus 300 is mounted and the detailed description thereof is the same as the above-described first exemplary embodiment according to the present disclosure.

Here, when the obstacle information detected by two sensors 311 corresponding to the duplexing area match, the controller 370 may determine that two sensors 311 are successfully duplexed. Here, when the obstacle information detected by two sensors 311 corresponding to the duplexing area match, the controller 370 may determine that the duplexing of two sensors 311 has failed. At this time, the controller 370may identify whether the obstacle information detected by two sensors 311 corresponding to the duplexing area match using predetermined sensor error information.

For example, as illustrated in FIG. 20, when "sensor A" and "sensor B" correspond to the duplexing area, an obstacle is detected from a dynamic safety zone generated by the "sensor A" to obtain obstacle information and an obstacle is detected from a dynamic safety zone generated by the "sensor B" to obtain obstacle information. Next, the "sensor A" and the "sensor B" are duplexed using the obstacle information detected by the "sensor A" and the obstacle information detected by the "sensor B". That is, it is identified whether the obstacle information detected by the "sensor A" and the obstacle information detected by the "sensor B" match. At this time, when the obstacle according to the obstacle information is located in a boundary of adjacent duplexing areas, it is identified whether the obstacle information detected by the "sensor A" and the obstacle information detected by the "sensor B" match using sensor error information. As a result of identification, if the information match, it is determined that the "sensor A" and the "sensor B" are successfully duplexed and if not, it is determined that the duplexing of the "sensor A" and the "sensor B" has failed. In the meantime, the logic board 331 and the controller 370 are integrally implemented so that the logic board 331 performs an operation of the controller 370.

That is, the logic board 331 may duplex two sensors 311 based on obstacle information detected by two sensors 311 corresponding to the duplexing area.

For example, when the "sensor A" and the "sensor B" correspond to the duplexing area, the "logic boardA" corresponds to the "sensor A", and the "logic board B" corresponds to the "sensor B", if the "logic board A" acquires obstacle information detected by the "sensor A", the "logic board A" identifies the duplexing area from which the obstacle is detected based on the obstacle information detected by the "sensor A". When the identified duplexing area is a duplexing area which corresponds to the "sensor A" and the "sensor B", the "logic board A" is supplied with the obstacle information detected by the "sensor B" from the "logic board B". By doing this, the "logic board A" identifies whether the obstacle information detected by the "sensor A" and the obstacle information detected by the "sensor B" match.

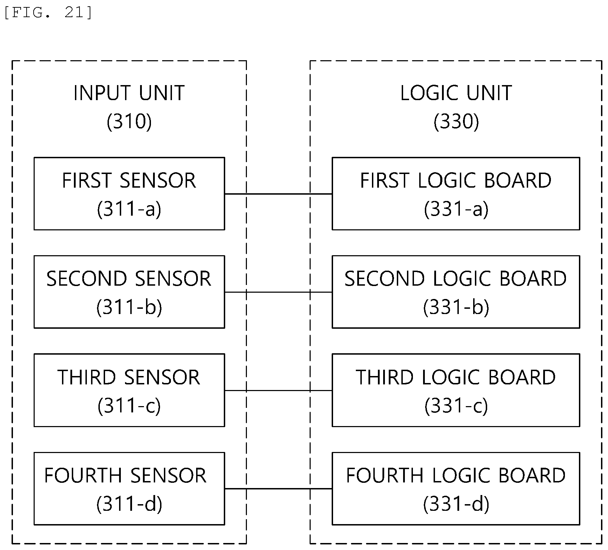

Now, an example of an apparatus for duplexing a sensor of a mobile robot according to a third exemplary embodiment of the present disclosure will be described with reference to FIGS. 21 to 23.

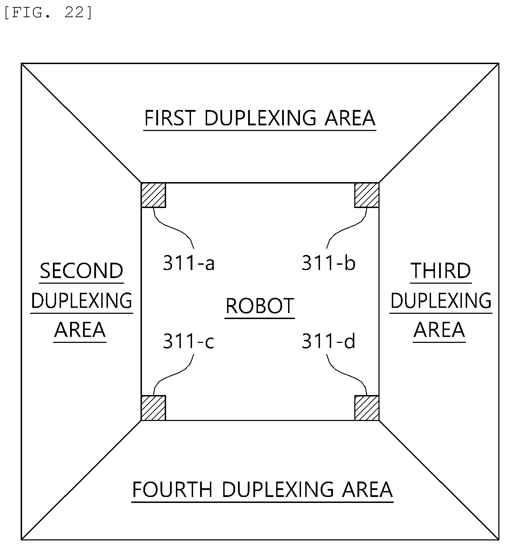

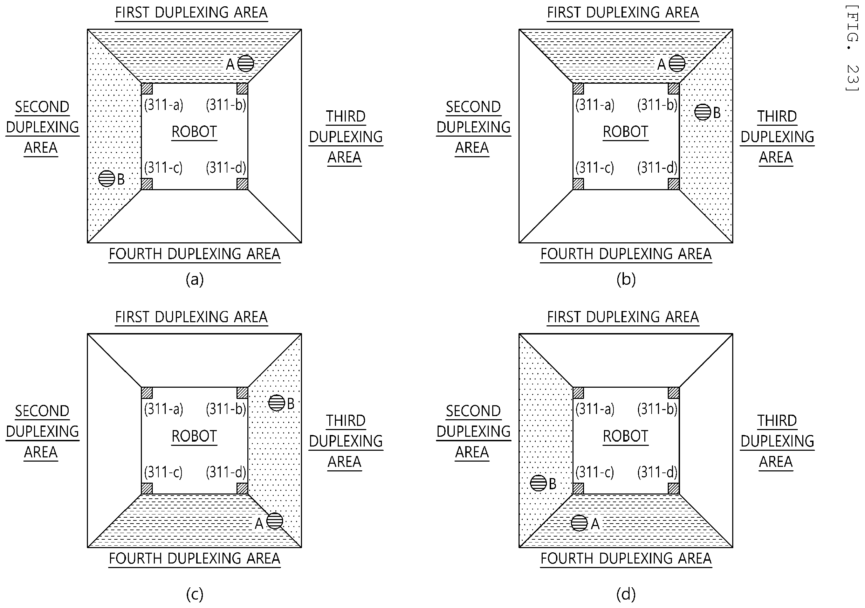

FIG. 21 is a block diagram for explaining an input unit and a logic unit of an example of a sensor duplexing apparatus of a mobile robot according to a third exemplary embodiment of the present disclosure, FIG. 22 is a view for explaining a duplexing area of a sensor duplexing apparatus illustrated in FIG. 21, and FIG. 23 is a view for explaining a duplexing area according to an obstacle a sensor duplexing apparatus illustrated in FIG. 21.

Referring to FIGS. 21 and 22, an input unit 310 according to an example of the sensor duplexing apparatus 300 includes a first sensor 311-a mounted at a front left side of the robot, a second sensor 311-b mounted at a front right side of the robot, a third sensor 311-c mounted at a rear left side of the robot, and a fourth sensor 311-d mounted at a rear left side of the robot.

The logic unit 330 according to an example of the sensor duplexing apparatus 300 includes a first logic board 331-a corresponding to the first sensor 311-a, a second logic board 331-b corresponding to the second sensor 311-b, a third logic board 331-c corresponding to the third sensor 311-c, and a fourth logic board 331-d corresponding to the fourth sensor 311-d. The duplexing area includes a first duplexing area which corresponds to the first sensor 311-a and the second sensor 311-b, a second duplexing area which corresponds to the first sensor 311-a and the third sensor 311-c, a third duplexing area which corresponds to the second sensor 311-b and the fourth sensor 311-d, and a fourth duplexing area which corresponds to the third sensor 311-c and the fourth sensor 311-d.

That is, the duplexing of the sensor 311 may be implemented in the omni-directional area of the robot (the first duplexing area which is the front area of the robot, the second duplexing area which is the left area of the robot, the third duplexing area which is the right area of the robot, and the fourth duplexing area which is the rear area of the robot.

For example, as illustrated in FIG. 23A, when "obstacle A" is detected, the "first duplexing area" which corresponds to the "obstacle A" is identified and the sensor duplexing is performed in the "first duplexing area" using obstacle information detected by two sensors corresponding to the "first duplexing area": "first sensor 311-a" and "second sensor 311-b". When "obstacle B" is detected, the "second duplexing area" which corresponds to the "obstacle B" is identified and the sensor duplexing is performed in the "second duplexing area" using obstacle information detected by two sensors corresponding to the "second duplexing area": "first sensor 311-a" and "third sensor 311-c".

Further, as illustrated in FIG. 23B, when "obstacle A" is detected, the "first duplexing area" which corresponds to the "obstacle A" is identified and the sensor duplexing is performed in the "first duplexing area" using obstacle information detected by two sensors corresponding to the "first duplexing area": "first sensor 311-a" and "second sensor 311-b". When "obstacle B" is detected, the "third duplexing area" which corresponds to the "obstacle B" is identified and the sensor duplexing is performed in the "third duplexing area" using obstacle information detected by two sensors corresponding to the "third duplexing area" : "second sensor 311-b" and "fourth sensor 311-d" . Further, as illustrated in FIG. 23C, when "obstacle A" is detected, the "fourth duplexing area" which corresponds to the "obstacle A" is identified and the sensor duplexing is performed in the "fourth duplexing area" using obstacle information detected by two sensors corresponding to the "fourth duplexing area": "third sensor 311-c" and "fourth sensor 311-d". At this time, when the "obstacle A" is located in the boundary of adjacent duplexing areas (the third duplexing area and the fourth duplexing area), it is identified whether the obstacle information detected by the "third sensor 311-c" and the obstacle information detected by the "fourth sensor 311-d" match using the sensor error information. When "obstacle B" is detected, the "third duplexing area" which corresponds to the "obstacle B" is identified and the sensor duplexing is performed in the "third duplexing area" using obstacle information detected by two sensors corresponding to the "third duplexing area": "second sensor 311-b" and "fourth sensor 311-d".

Further, as illustrated in FIG. 23D, when "obstacle A" is detected, the "fourth duplexing area" which corresponds to the "obstacle A" is identified and the sensor duplexing is performed in the "fourth duplexing area" using obstacle information detected by two sensors corresponding to the "fourth duplexing area": "third sensor 311-c" and "fourth sensor 311-d". When "obstacle B" is detected, the "second duplexing area" which corresponds to the "obstacle B" is identified and the sensor duplexing is performed in the "second duplexing area" using obstacle information detected by two sensors corresponding to the "second duplexing area": "first sensor 311-a" and "third sensor 311-c".

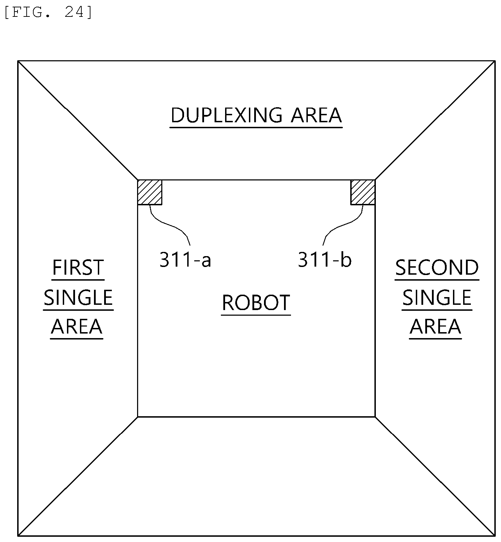

Now, another example of a sensor duplexing apparatus of a mobile robot according to a third exemplary embodiment of the present disclosure will be described with reference to FIG. 24. FIG. 24 is a view for explaining a duplexing area of a sensor duplexing apparatus of a mobile robot according to a third exemplary embodiment of the present disclosure.

Referring to FIG. 24, an input unit 310 according to another example of the sensor duplexing apparatus 300 includes a first sensor 311-a mounted at one left side of the robot and a second sensor 311-b mounted at one right side of the robot.

A logic unit 330 according to another example of the sensor duplexing apparatus 300 includes a first logic board 331-a corresponding to the first sensor 311-a and a second logic board 331-b corresponding to the second sensor 311-b. The duplexing area corresponds to the first sensor 311-a and the second sensor 311-b.

That is, the duplexing of the sensor 311 may be implemented in a specific area of the omni-directional area of the robot. For example, the front area of the robot may be configured as a duplexing area by the first sensor 311-a and the second sensor 311-b. In contrast, a left area of the robot is configured by a first single area sensed only by the first sensor 311-a and a right area of the robot is configured by a second single area sensed only by the second sensor 311-b. In a rear area of the robot, a sensor 311 is not provided so that it is configured as an area which is not sensed.

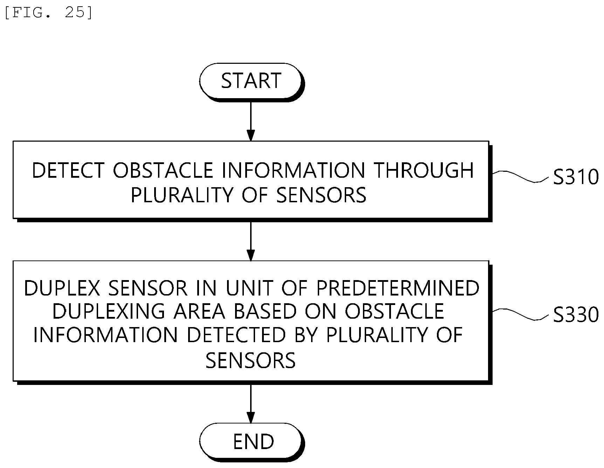

Now, a method for duplexing a sensor of a mobile robot according to a third exemplary embodiment of the present disclosure will be described with reference to FIG. 25.

FIG. 25 is a flowchart for explaining a sensor duplexing method of a mobile robot according to a third exemplary embodiment of the present disclosure.

Referring to FIG. 25, the sensor duplexing apparatus 300 detects obstacle information by each of the plurality of sensors 311 (S310).

That is, the sensor duplexing apparatus 310 detects obstacle information by the sensor 311 based on the dynamic safety zone generated by the sensor 311. At this time, the dynamic safety zone is dynamically generated based on a movement direction and a movement speed of a robot including a sensor duplexing apparatus 300.

Next, the sensor duplexing apparatus 300 may duplex a sensor 311 in the unit of predetermined duplexing areas, based on the obstacle information detected by the plurality of sensors 311 (S330).

That is, the sensor duplexing apparatus 300 may duplex two sensors 311 based on obstacle information detected by two sensors 311 corresponding to the duplexing area.

Here, when the obstacle information detected by two sensors 311 corresponding to the duplexing area match, the sensor duplexing apparatus 300 may determine that two sensors 311 are successfully duplexed. In contrast, when the obstacle information detected by two sensors 311 corresponding to the duplexing area do not match, the sensor duplexing apparatus 300 may determine that duplexing of two sensors 311 has failed. At this time, the sensor duplexing apparatus 300 may identify whether the obstacle information detected by two sensors 311 corresponding to the duplexing area match using predetermined sensor error information.

Even though it has been described above that all components of the exemplary embodiment of the present invention are combined as one component or operate to be combined, the present invention is not limited to the exemplary embodiment. In other words, one or more components may be selectively combined to be operated within a scope of the present invention. Further, all components may be implemented as one independent hardware but a part or all of the components are selectively combined to be implemented as a computer program which includes a program module which performs a part or all functions combined in one or plural hardwares. Further, such a computer program may be stored in a computer readable media such as a USB memory, a CD disk, or a flash memory to be read and executed by a computer to implement the exemplary embodiment of the present invention. The recording media of the computer program may include a magnetic recording medium or an optical recording medium.

The above description illustrates a technical spirit of the present invention as an example and various changes, modifications, and substitutions become apparent to those skilled in the art within a scope of an essential characteristic of the present invention. Therefore, as is evident from the foregoing description, the exemplary embodiments and accompanying drawings disclosed in the present invention do not limit the technical spirit of the present invention and the scope of the technical spirit is not limited by the exemplary embodiments and accompanying drawings. The protective scope of the present disclosure should be construed based on the following claims, and all the technical concepts in the equivalent scope thereof should be construed as falling within the scope of the present disclosure.

**Claims**

1. A dynamic safety zone generating apparatus (100) of a mobile robot, comprising:

an information acquiring unit (110) which is configured to acquire a movement direction and a movement speed of a mobile robot; and
a safety zone generating unit (130) which dynamically is configured to generate a safety zone for the mobile robot based on shape information of the mobile robot, a movement direction of the mobile robot acquired by the information acquiring unit, and a movement speed of the mobile robot acquired by the information acquiring unit, wherein the safety zone generating unit (130) is configured to acquire a default safety zone based on the shape information of the mobile robot and is configured to dynamically generate a safety zone for the mobile robot based on the default safety zone a the future predicted location of the mobile robot

**characterized in that**

the safety zone generating unit (130) is configured to vary the front, rear, left, and right distances according to the default safety zone based on the future predicted location of the mobile robot to dynamically generate the safety zone for the mobile robot
and wherein
the safety zone generating unit (130) is configured to acquire a future predicted location of the mobile robot based on the movement direction and the movement speed of the mobile robot and dynamically generates a safety zone of the mobile robot based on the shape information of the mobile robot and the future predicted location of the mobile robot.

2. The dynamic safety zone generating apparatus (100) according to claim 1, wherein the dynamic safety zone generating unit (130) is configured to acquire the movement speed of the x-axis direction and the movement speed of the y-axis direction based on the movement direction and the movement speed of the mobile robot, is configured to acquire the future predicted x-axis location based on the movement speed of the x-axis direction and is configured to acquire the future predicted y-axis location of the mobile robot based on the movement speed of the y-axis direction, and is configured to acquire a future predicted location of the mobile robot based on the future predicted x-axis location and the future predicted y-axis location.

3. The dynamic safety zone generating apparatus (100) according to one of the preceding claims, wherein the safety zone generating unit (130) is configured to acquire front, rear, left, and right distances with respect to the center point of the mobile robot based on the shape information of the mobile robot and is configured to acquire a default safety zone formed of four vertices based on the center point of the robot and the front, rear, left, and right distances.

4. The dynamic safety zone generating apparatus (100) according to one of the preceding claims, wherein the safety zone generating unit (130) is configured to acquire a plurality of sub safety zones by varying the front, rear, left, and right distances according to the default safety zone plural times, based on the current location of the mobile robot and the future predicted location of the mobile robot and dynamically generates the safety zone for the mobile robot based on the plurality of sub safety zones.

**Patentansprüche**

1. Einrichtung (100) zum dynamischen Generieren einer Sicherheitszone eines mobilen Roboters, umfassend:

eine Informationserfassungseinheit (110), die konfiguriert ist, um eine Bewegungsrichtung und eine Bewegungsgeschwindigkeit eines mobilen Roboters zu erfassen; und
Einheit (130) zum Generieren einer Sicherheitszone, die dynamisch konfiguriert ist, um eine Sicherheitszone für den mobilen Roboter basierend auf Forminformationen des mobilen Roboters, einer Bewegungsrichtung des mobilen Roboters, die durch die Informationserfassungseinheit erfasst wird, und einer Bewegungsgeschwindigkeit des mobilen Roboters, die durch die Informationserfassungseinheit erfasst wird, zu generieren, wobei die Einheit (130) zum Generieren einer Sicherheitszone konfiguriert ist, um eine Standardsicherheitszone basierend auf den Forminformationen des mobilen Roboters zu erfassen und konfiguriert ist, um eine Sicherheitszone für den mobilen Roboter basierend auf der Standardsicherheitszone und dem zukünftigen vorhergesagten Ort des mobilen Roboters dynamisch zu generieren,
**dadurch gekennzeichnet, dass**
die Einheit (130) zum Generieren einer Sicherheitszone konfiguriert ist, um den vorderen, hinteren, linken und rechten Abstand entsprechend der Standardsicherheitszone basierend auf dem zukünftigen vorhergesagten Ort des mobilen Roboters zu variieren, um die Sicherheitszone für den mobilen Roboter dynamisch zu generieren und wobei
die Einheit (130) zum Generieren einer Sicherheitszone konfiguriert ist, um einen zukünftigen vorhergesagten Ort des mobilen Roboters basierend auf der Bewegungsrichtung und der Bewegungsgeschwindigkeit des mobilen Roboters zu erfassen und eine Sicherheitszone des mobilen Roboters basierend auf den Forminformationen des mobilen Roboters und des zukünftigen vorhergesagten Orts des mobilen Roboters dynamisch zu generieren.

**2.** Einrichtung (100) zum dynamischen Generieren einer Sicherheitszone nach Anspruch 1, wobei die Einheit (130) zum Generieren einer dynamischen Sicherheitszone konfiguriert ist, um die Bewegungsgeschwindigkeit der x-Achsen-Richtung und die Bewegungsgeschwindigkeit der y-Achsen-Richtung basierend auf der Bewegungsrichtung und der Bewegungsgeschwindigkeit des mobilen Roboters zu erfassen, konfiguriert ist, um den zukünftigen vorhergesagten x-Achsen-Ort basierend auf der Bewegungsgeschwindigkeit der x-Achsen-Richtung zu erfassen und konfiguriert ist, um den zukünftigen vorhergesagten y-Achsen-Ort des mobilen Roboters basierend auf der Bewegungsgeschwindigkeit der y-Achsen-Richtung zu erfassen, und konfiguriert ist, um einen zukünftigen vorhergesagten Ort des mobilen Roboters basierend auf dem zukünftigen vorhergesagten x-Achsen-Ort und dem zukünftigen vorhergesagten y-Achsen-Ort zu erfassen.

**3.** Einrichtung (100) zum dynamischen Generieren einer Sicherheitszone nach einem der vorstehenden Ansprüche, wobei die Einheit (130) zum Generieren einer Sicherheitszone konfiguriert ist, um den vorderen, hinteren, linken und rechten Abstand bezüglich des Mittelpunkts des mobilen Roboters basierend auf den Forminformationen des mobilen Roboters zu erfassen und konfiguriert ist, um eine Standardsicherheitszone zu erfassen, die aus vier Eckpunkten basierend auf dem Mittelpunkt des Roboters und dem vorderen, hinteren, linken und rechten Abstand ausgebildet ist.

**4.** Einrichtung (100) zum dynamischen Generieren einer Sicherheitszone nach einem der vorstehenden Ansprüche, wobei die Einheit (130) zum Generieren einer Sicherheitszone konfiguriert ist, um eine Vielzahl von Teilsicherheitszonen durch Variieren des vorderen, hinteren, linken und rechten Abstands gemäß der Standardsicherheitszone mehrere Male zu erfassen, basierend auf dem aktuellen Ort des mobilen Roboters und dem zukünftigen vorhergesagten Ort des mobilen Roboters und die Sicherheitszone für den mobilen Roboter basierend auf der Vielzahl von Teilsicherheitszonen dynamisch zu generieren.

**Revendications**

**1.** Appareil de génération de zone de sécurité dynamique (100) d'un robot mobile, comprenant :

une unité d'acquisition d'informations (110) qui est configurée pour acquérir une direction de déplacement et une vitesse de déplacement d'un robot mobile ; et
une unité de génération de zone de sécurité (130) qui est configurée dynamiquement pour générer une zone de sécurité pour le robot mobile sur la base d'informations de forme du robot mobile, d'une direction de déplacement du robot mobile acquise par l'unité d'acquisition d'informations, et d'une vitesse de déplacement du robot mobile acquise par l'unité d'acquisition d'informations, dans lequel l'unité de génération de zone de sécurité (130) est configurée pour acquérir une zone de sécurité par défaut sur la base des informations de forme du robot mobile et est configurée pour générer dynamiquement une zone de sécurité pour le robot mobile sur la base de la zone de sécurité par défaut un l'emplacement futur prédit du robot mobile
**caractérisé en ce que**
l'unité de génération de zone de sécurité (130) est configurée pour faire varier les distances avant, arrière, gauche et droite selon la zone de sécurité par défaut sur la base de l'emplacement futur prédit du robot mobile pour générer dynamiquement la zone de sécurité pour le robot mobile
et dans lequel
l'unité de génération de zone de sécurité (130) est configurée pour acquérir un emplacement futur prédit du robot mobile sur la base de la direction de déplacement et de la vitesse de déplacement du robot mobile et génère dynamiquement une zone de sécurité du robot mobile sur la base des informations de forme du robot mobile et de l'emplacement futur prédit du robot mobile.

**2.** Appareil de génération de zone de sécurité dynamique (100) selon la revendication 1, dans lequel l'unité de génération de zone de sécurité dynamique (130) est configurée pour acquérir la vitesse de déplacement de la direction de l'axe x et la vitesse de déplacement de la direction de l'axe y sur la base de la direction de déplacement et de la vitesse de déplacement du robot mobile, est configurée pour acquérir l'emplacement futur prédit sur l'axe x sur la base de la vitesse de déplacement de la direction de l'axe x et est configurée pour acquérir l'emplacement futur prédit sur l'axe y du robot mobile sur la base de la vitesse de déplacement de la direction de l'axe y, et est configurée pour acquérir un emplacement futur prédit du robot mobile sur la base de l'emplacement futur prédit sur l'axe x et de l'emplacement futur prédit sur l'axe y.

3. Appareil de génération de zone de sécurité dynamique (100) selon l'une des revendications précédentes, dans lequel l'unité de génération de zone de sécurité (130) est configurée pour acquérir des distances avant, arrière, gauche et droite par rapport au point central du robot mobile sur la base des informations de forme du robot mobile et est configurée pour acquérir une zone de sécurité par défaut formée de quatre sommets sur la base du point central du robot et des distances avant, arrière, gauche et droite.

4. Appareil de génération de zone de sécurité dynamique (100) selon l'une des revendications précédentes, dans lequel l'unité de génération de zone de sécurité (130) est configurée pour acquérir une pluralité de sous-zones de sécurité en faisant varier les distances avant, arrière, gauche et droite selon la zone de sécurité par défaut plusieurs fois, sur la base de l'emplacement actuel du robot mobile et de l'emplacement futur prédit du robot mobile, et génère dynamiquement la zone de sécurité pour le robot mobile sur la base de la pluralité de sous-zones de sécurité.

[FIG. 1]

SAFETY ZONE
SELECTION LOGIC

| SPEED 1 | ZONE 1 |
| SPEED 2 | ZONE 2 |
| SPEED 3 | ZONE 3 |
| SPEED 4 | ZONE 4 |
| SPEED 5 | ZONE 5 |

SPEED INFORMATION
DIRECTION INFORMATION

DYNAMIC
SATISFY ZONE

[FIG. 2]

I : Input

I1

I2

L : Logic

$i_m$

$i_m$

L1

L2

c

O : Output

m

$i_m$

O1

m

$i_m$

O2

[FIG. 3]

100

| INFORMATION ACQUIRING UNIT (110) | → MOVEMENT DIRECTION / MOVEMENT SPEED → | SAFETY ZONE GENERATING UNIT (130) |

SHAPE INFORMATION

[FIG. 4]

DYNAMIC SATISFY ZONE GENERATING LOGIC

MOVEMENT DIRECTION / MOVEMENT SPEED → ACQUIRE FUTURE PREDICTED LOCATION

SHAPE INFORMATION → ACQUIRE DEFAULT SAFETY ZONE

→ GENERATE DYNAMIC SAFETY ZONE → DYNAMIC SATISFY ZONE

[FIG. 5]

[FIG. 6]

[FIG. 7]

[FIG. 8]

[FIG. 9]

[FIG. 10]

[FIG. 11]

FUTURE PREDICTED LOCATION

CENTER POINT

FUTURE PREDICTED LOCATION

FUTURE PREDICTED LOCATION

CENTER POINT

FUTURE PREDICTED LOCATION

[FIG. 12]

[FIG. 13]

[FIG. 14]

```
        ┌─────────┐
        │  START  │
        └────┬────┘
             │
             ▼
┌──────────────────────────────────────────────────────────────┐
│ ACQUIRE MOVEMENT DIRECTION AND MOVEMENT SPEED OF MOBILE ROBOT │ ── S110
└──────────────────────────────────────────────────────────────┘
             │
             ▼
┌──────────────────────────────────────────────────────────────┐
│   DYNAMICALLY GENERATE SAFETY ZONE FOR MOBILE ROBOT          │
│     BASED ON SHAPE INFORMATION OF MOBILE ROBOT,             │ ── S130
│ MOVEMENT DIRECTION AND MOVEMENT SPEED OF MOBILE ROBOT        │
└──────────────────────────────────────────────────────────────┘
             │
             ▼
        ┌─────────┐
        │   END   │
        └─────────┘
```

[FIG. 15]

100

| INPUT UNIT (210) | LOGIC UNIT (230) | OUTPUT UNIT (250) |
|---|---|---|
| SENSOR (211) | LOGIC UNIT (231) | FIRST OR GATE (251) |
| ⋮ | ⋮ | |
| SENSOR (211) | LOGIC UNIT (231) | SECOND OR GATE (252) |

SECOND OR GATE
(270)

[FIG. 16]

[FIG. 17]

[FIG. 18]

```
                    ╭─────────────╮
                    │    START    │
                    ╰──────┬──────╯
                           │
                           ▼
  ┌──────────────────────────────────────────────────────┐
  │  INPUT DUPLEXING TARGET INFORMATION BY USER           │─── S210
  └──────────────────────────────────────────────────────┘
                           │
                           ▼
  ┌──────────────────────────────────────────────────────┐
  │  CHANGE VALUE OF DUPLEXING PARAMETER BASED            │
  │      ON DUPLEXING TARGET INFORMATION                  │─── S230
  └──────────────────────────────────────────────────────┘
                           │
                           ▼
                    ╭─────────────╮
                    │     END     │
                    ╰─────────────╯
```

[FIG. 19]

<u>300</u>

| INPUT UNIT (310) | LOGIC UNIT (330) | OUTPUT UNIT (350) |
|---|---|---|
| SENSOR (311) ⋮ SENSOR (311) | LOGIC BOARD (331) ⋮ LOGIC BOARD (331) | |

CONTROLLER (370)

[FIG. 20]

DUPLEXING AREA

SENSOR A (311)

SENSOR B (311)

GENERATE DYNAMIC SAFETY ZONE

GENERATE DYNAMIC SAFETY ZONE

DETECT OBSTACLE

DETECT OBSTACLE

ACQUIRE OBSTACLE INFORMATION

ACQUIRE OBSTACLE INFORMATION

DUPLEX SENSOR A AND SENSOR B

IDENTIFY WHETHER INFORMATION DETECTED BY SENSOR A AND SENSOR B MATCHES USING SENSOR ERROR INFORMATION AND IF INFORMATION MATCHES, DUPLEXING OF SENSOR A AND SENSOR B IS SUCCESSFUL AND IF INFORMATION DOES NOT MATCH, DUPLEXING OF SENSOR A AND SENSOR B FAILS

[FIG. 21]

```
┌ ─ ─ ─ ─ ─ ─ ─ ─ ─ ─ ─ ┐      ┌ ─ ─ ─ ─ ─ ─ ─ ─ ─ ─ ─ ┐
                                
       INPUT UNIT                       LOGIC UNIT
         (310)                            (330)
                                
  ┌─────────────────┐            ┌─────────────────────┐
       FIRST SENSOR                  FIRST LOGIC BOARD
        (311-a)      ──────────────     (331-a)
  └─────────────────┘            └─────────────────────┘
                                
  ┌─────────────────┐            ┌─────────────────────┐
      SECOND SENSOR                 SECOND LOGIC BOARD
        (311-b)      ──────────────     (331-b)
  └─────────────────┘            └─────────────────────┘
                                
  ┌─────────────────┐            ┌─────────────────────┐
       THIRD SENSOR                  THIRD LOGIC BOARD
        (311-c)      ──────────────     (331-c)
  └─────────────────┘            └─────────────────────┘
                                
  ┌─────────────────┐            ┌─────────────────────┐
      FOURTH SENSOR                 FOURTH LOGIC BOARD
        (311-d)      ──────────────     (331-d)
  └─────────────────┘            └─────────────────────┘
                                
└ ─ ─ ─ ─ ─ ─ ─ ─ ─ ─ ─ ┘      └ ─ ─ ─ ─ ─ ─ ─ ─ ─ ─ ─ ┘
```

[FIG. 22]

FIRST DUPLEXING AREA

SECOND DUPLEXING AREA

311-a

311-b

ROBOT

THIRD DUPLEXING AREA

311-c

311-d

FOURTH DUPLEXING AREA

[FIG. 23]

[FIG. 24]

[FIG. 25]

```
                    ( START )
                        |
                        v
  +----------------------------------------+
  | DETECT OBSTACLE INFORMATION THROUGH    |  ___ S310
  |        PLURALITY OF SENSORS            |
  +----------------------------------------+
                        |
                        v
  +----------------------------------------+
  | DUPLEX SENSOR IN UNIT OF PREDETERMINED |
  | DUPLEXING AREA BASED ON OBSTACLE       |  ___ S330
  | INFORMATION DETECTED BY PLURALITY OF   |
  |              SENSORS                    |
  +----------------------------------------+
                        |
                        v
                    (  END  )
```

**EP 4 257 301 B1**

REFERENCES CITED IN THE DESCRIPTION

**Patent documents cited in the description**

- US 2019161274 A1
- US 2009222134 A1
- WO 2017050358 A1